# EUROPEAN PATENT APPLICATION

(11) **EP 4 830 872 A1**
(43) Date of publication of application: **28.10.2026**
(21) Application number: 26172648.3
(22) Date of filing: 16.04.2026
(51) Int. Cl.: B25H 1/00

(54) **A LOAD DISTRIBUTION SYSTEM FOR RELIEVING THE WEIGHT OF A HAND-HELD WORK TOOL**

(30) Priority: 24.04.2025 SE 2530241
(71) Applicant: Eklöf, Henrik, 696 75 Åmmeberg (SE)
(72) Inventor: Eklöf, Henrik, 696 75 Åmmeberg (SE); Eklöf, Henrik, 696 75 Åmmeberg (SE)
(74) Representative: Heimdal, Pär

(57) **Abstract**

A load distribution system (100) for relieving the weight of a hand-held work tool (110). The load distribution system (100) comprises a balance block (120), in turn comprising a coil spring (210) and a coilable cable (130) which is attached to the coil spring (210) at one end and has a fastening device (140) at its opposite end. The load distribution system (100) also comprises a bracket (150) mounted on the work tool (110), where the bracket (150) has an extension substantially perpendicular to the longitudinal extension of the work tool (110). Furthermore, a harness (160) is comprised, intended to be worn by a user of the work tool (110). The balance block (120) is arranged to be attached to the harness (160), and the fastening device (140) is arranged to be removably attached to the bracket (150) and to move along the extension of the bracket (150).

## Description

### TECHNICAL FIELD

The system described herein is intended to relieve the weight of a hand-held work tool, for example a chainsaw, by distributing the weight of the work tool from hands and arms of a user, to core muscles of the body of the user. The load distribution system comprises a balance block with a retractable cable. The balance block is attached to a harness that the user wears. The cable of the balance block has a fastening device that can be removably attached to a bracket that in turn is permanently attached to the chainsaw. The fastening device is arranged to run laterally along the bracket when the work tool is rotated at different angles. The bracket has an extension substantially perpendicular to the longitudinal extension of the work tool. The bracket has approximately the same radius of curvature as the handle and is arranged substantially in parallel with the handle. The bracket can thus move along the bracket and allow the balance block to relieve the weight of the work tool via the cable. The work tool can thereby be angled without creating a twisting or turning moment on the work tool.

The disclosed system allows the user to reduce the load imposed by the work tool without compromising its manoeuvrability.

### BACKGROUND

Handling large and heavy hand-held tools such as chainsaws and the like is often a tough ergonomic challenge.

Holding and controlling a heavy chainsaw at a certain height requires static muscle activity in the arms and shoulders, which can lead to muscle tension, inflammation or chronic pain such as rotator cuff problems, tennis elbow (*lateral epicondylitis*), wrist inflammation and/or tendon problems. Sick leave and treatment of this type of strain injury can often be long-lasting and have an uncertain outcome.

Furthermore, chainsaw operation in forest environments often involves uneven and inclined terrain, compelling the user to adopt strained body positions. This is compounded by the requirement to wear substantial personal protective equipment (PPE), including safety helmets, visors, Kevlar protective clothing, and steel-toed boots, all of which contribute to increased ergonomic load.

Forestry work, and in particular manual work with a chainsaw, is unfortunately one of the industries with the highest incidence of accidents in a country like Sweden. Each year, numerous fatalities and serious incidents occur, for example during operations in storm-felled forest. It is therefore important to continuously reduce the risks associated with forestry work by improving the ergonomic working conditions of the logger.

The forestry industry is of significant economic importance, and although the advancement of automation in forestry, including harvesters, skidders, processors, and other forest machinery, has largely replaced manual chainsaw work, such work remains common. In many situations, it has proven difficult to fully replace the logger's manual chainsaw work, which is why improving the logger's working conditions is also important from an efficiency standpoint.

### SUMMARY

An object of the device described herein is to eliminate at least some of the above-mentioned disadvantages and to relieve the weight of a hand-held work tool, by distributing weight from arms/hands to the body of the user.

This and other objects are achieved by the features of the attached independent patent claim. Further implementation forms are apparent from the dependent patent claims, the description and the drawings, which can be advantageously combined to obtain further advantages if desired.

According to a first aspect, a load distribution system is comprised for relieving the weight of a hand-held work tool from hands and arms of a user. The load distribution system comprises a balance block which in turn comprises a coil spring and a retractable cable which is attached to the coil spring at one end and has a fastening device at its opposite end. The load distribution system also comprises a bracket, mounted on the work tool, where the bracket has an extension substantially perpendicular to the longitudinal extension of the work tool. Furthermore, the load distribution system also comprises a harness. The harness is arranged to be worn on the user's upper body of the user of the work tool.

The balance block is arranged to be attached to the harness. The attachment device is arranged to be detachably attached to the bar and to be able to be moved along the extension of the bar.

This relieves the user of the weight of the work tool, without compromising the manoeuvrability of the work tool.

By distributing the weight to the body via the harness, the static load on the hands, arms and the smaller muscles of the upper body is reduced. This reduces the risk of muscle fatigue, pain and overuse injuries such as tennis elbow or shoulder problems.

Another advantage is that the user's endurance and efficiency increase. When the user does not have to carry the entire weight in his arms, he can work longer without getting tired. Less fatigue means fewer breaks and thus higher productivity.

With the relief, it becomes easier to keep the work tool stable during operation, especially when working in difficult-to-reach angles and/or odd working positions. This provides safer cuts and reduces the risk of unintentional movements and/or accidents.

The relief leads to increased safety, as less tired hands and arms reduce the risk of mistakes or dropped tools. If the work tool "rests" in the cable when not in use, the risk of injury from accidental dropping the work tool is reduced. The cable thus also functions as a safety line that prevents the work tool from injuring the user, as well as from damaging the work tool against the ground/ underneath.

By being able to distribute the weight of the work tool between the user's arms and body, the user is given the opportunity to vary their working position and work in a more upright position instead of leaning forward and compensating for the weight, which in the long term protects the back and neck from injuries and reduces the risk of strain injuries and associated sick leave.

In some embodiments, the fastening device may comprise a friction-reducing contact surface between the bracket and the fastening device. This friction-reducing contact surface may comprise a running wheel, wherein the contact surface between the bracket and the fastening device is constituted by the circumferential surface of the running wheel.

This facilitates the movement of the fastening device along the bracket when the user turns the work tool. This enables the user to turn the work tool without being affected by a turning moment, which facilitates manoeuvrability.

In some embodiments, the fastening device may comprise a locking mechanism for detachably securing the fastening device in the bracket. The locking mechanism may comprise for example, a hook, a cabin hook, a screw mechanism, a locking pin, a pin, or the like.

In this way, the user can both easily and securely attach the fastening device of the relief system to the bracket and, if necessary, easily detach it, for example for certain specific working moments or during a break.

In some embodiments, the bracket may be mounted on the hand-held work tool at the approximate centre of gravity of the work tool in its longitudinal extent, when the work tool is held in its ordinary working position.

By allowing the relief or the load distribution system to act on the work tool at the approximate centre of gravity, manoeuvrability is facilitated as no twisting moment is created around the centre of gravity by the relief of the balance block.

The bracket can in some embodiments be designed with a smooth curvature, comprising an approximately constant radius from the centre line of the work tool in the longitudinal extent of the work tool.

This facilitates the movement of the fastening device along the bracket when the user rotates the work tool to use it at a different angle. This allows the user to rotate the work tool without being affected by a twisting moment, which facilitates manoeuvrability.

In some embodiments of the load distribution system, the balance block has an adjustable lifting force. The adjustable lifting force can correspond to about 20-100% of the weight of the work tool, for example about 40-70% thereof.

By being able to regulate the lifting force, the user can adapt the weight distribution to their own wishes, muscle capacity and the current work situation. The user can also switch between work tools with different weights.

In some embodiments of the load distribution system, the balance block may comprise a locking mechanism that locks the retractable cable in a fixed position.

The distance between the balance block and the work tool may thus be constant as long as the locking mechanism is activated, which can be an advantage in certain work situations.

In some embodiments, the hand-held power tool may be constituted by a chainsaw, such as a motorized chainsaw.

Loggers have a particularly heavy and risky working situation, while they have a great need to angle the chainsaw at different angles, for example when limbing a fallen tree. The load distribution system is therefore particularly helpful for this type of tool.

Other advantages of the disclosed solution will become apparent from the following detailed description.

### BRIEF DESCRIPTION OF THE DRAWINGS

Some embodiments will be described in more detail below, with reference to the accompanying drawings, in which:
- **Figure 1**: depicts a weight distribution system for relieving the weight of a hand-held work tool according to one embodiment;
- **Figure 2**: demonstrates a balance block comprising a roller spring and a coilable cable which is attached to the coil spring at one end and has a fastening device at its opposite end;
- **Figure 3**: illustrates a fastening device arranged to be removably attached to the bracket and to be able to be moved along the extension of the bracket, illustrated in two angles, one of which is in cross-section.

### DETAILED DESCRIPTION

Some embodiments of the invention in the form of a load distribution system for relieving weight of a hand-held work tool will now be described in more detail. The system can, however, be realized in many different forms and is not limited to the examples given in this description or illustrated in the drawings, but is limited only by the independent patent claim.

The drawings are designed for conceptual illustration purposes and show the general inventive idea rather than an exact depiction of details. The drawings are not necessarily to scale.

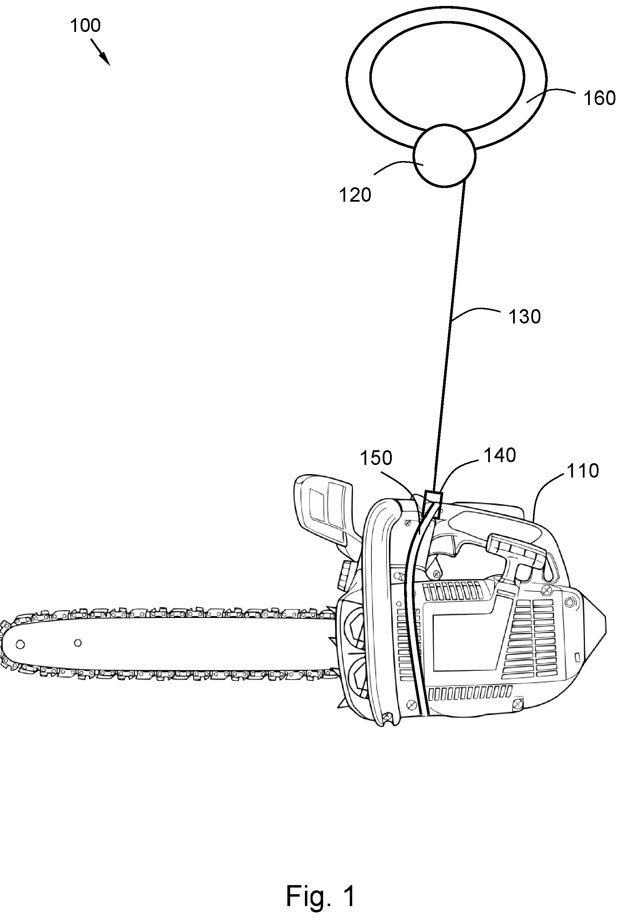

Figure 1 schematically illustrates a load distribution system 100 for relieving the weight of a hand-held work tool 110 from hands and arms of a user. In the illustrated example, the hand-held tool 110 is a chainsaw. In other examples, the hand-held tool 110 may be any hand-held tool, particularly a tool that comprises a motor such as, for example, a drill, cutter, grinder, concrete mixer, angle grinder, screwdriver, pneumatic tool, or the like; or, for example, a strapping tool.

The hand-held work tool 110 has a bracket 150 mounted on the work tool 110. The bracket 150 is included in the relief system and has an extension substantially perpendicular to the longitudinal extension of the work tool. On a chainsaw, the bracket 150 may be approximately parallel to the front handle of the chainsaw, but distinct therefrom.

The bracket 150 may be formed with a uniform curvature, comprising an approximately constant radius from the centreline of the work tool 110 in the longitudinal extension of the work tool 110. In some embodiments, the bracket 150 may be mounted on the hand-held work tool 110 at the approximate centre of gravity of the work tool 110 in its longitudinal extension, when the work tool 110 is held in its ordinary working position. Thus, no unwanted twisting moment is created when the user twists or angles the work tool 110 during operation, which improves manoeuvrability and the user's experience during use. The surface of the bracket 150, regardless of the diametrical shape of the bracket 150, can advantageously be smooth/ even to reduce friction between the fastening device 140 and the bracket 150. The user's manoeuvrability is thereby increased by the demonstrated solution.

The bracket 150 may be formed of steel, a steel alloy or perhaps titanium/ titanium alloy and have a cross-section that is approximately circular and a diameter of approximately 1-2 cm. By making the bracket 150 from a material that is not deformable, unwanted flexibility or movement is avoided. A bracket 150 made from a durable material ensures that the bracket 150 does not break during use, which could surprise the user and cause a serious accident.

In some embodiments, the bracket 150 may be attached to the front handle of the work tool, for example when the work tool 110 is a chainsaw. The bracket 150 may thus run parallel to, but at a certain approximately constant distance from, and behind the front handle, as viewed in the direction of the work tool 110 during operation. This ensures that the bracket 150 does not get in the way or interfere with the user while working with the work tool 110. The user is thereby enabled to hold the hand-held work tool 110 firmly in the front handle with both hands while not being disturbed by the bracket 150.

The load distribution system 100 also comprises a balance block 120 comprising a coil spring and a retractable cable 130 which is attached to the coil spring at one end and has a fastening device 140 at its opposite end. The coil spring may also be referred to as a roller spring and the retractable cable 130 may also be referred to as a coilable wire.

The fastening device 140 is arranged to be removably attached to the bracket 150 and to be able to be moved along the extension of the bracket when the user rotates the work tool 110 to angle it to different working angles.

The balance block 120 may have an adjustable lifting force which may, for example, correspond to about 20-100% of the weight of the work tool, preferably about 40-90%, or in particular about 50-70%. If the work tool 110 weighs 6 kg, it may be appropriate for the balance block 120 to be adjustable between 3-6 kg, for example.

The balance block 120 may have a runner wheel or other friction-reducing means at the wire outlet to eliminate or reduce unwanted friction between the wire 130 and the front edge of the balance block at the wire outlet.

The balance block 120 may in some forms comprise a locking mechanism that locks the retractable cable 130 in a fixed position.

The load distribution system 100 also comprises a harness 160, intended to be worn by a user of the work tool 110. The harness 160 can be worn as a vest and thus surround the shoulder portion and/or back of the user, or around the neck of the user. The harness 160 is used to relieve the weight from the work tool 110 during repetitive or heavy work tasks. The harness 160 can be an ergonomically designed carrying device, made of durable but flexible material and worn over the upper body, like a vest or protective vest.

The harness 160 may be provided with one or more strategically placed attachments and suspension points, usually at chest height, waist height, shoulder height, etc. This/ these attachment/s enable the mounting of the balance block 120. This transfers the weight from the work tool 110 to the wearer's body, rather than to the arms and shoulders, which reduces muscle strain, fatigue and the risk of strain injuries of the user.

In some embodiments, the harness 160 may comprise one or more attachment straps to secure and stabilize the harness 160 around the user's hips, abdomen, and/or chest. This prevents or at least reduces the risk of the harness 160 twisting during operation. The harness 160 may also comprise reinforced or padded portions, particularly at the shoulder portion, to absorb and distribute the weight transferred from the work tool 110.

In some embodiments, the harness 160 may comprise a back plate and a chest plate. Two shoulder straps may be attached to the back plate, which in use may run over the user's shoulders and connect to the chest plate, which the user may wear at approximately chest height. These shoulder straps may be removably attached to the chest plate with an attachment similar to a seat belt or similar attachment device. Two lateral straps may be attached to the back plate, which in use run under the user's arms, alternatively around the user's waist and connect to the chest plate. These lateral straps may also be removably attached to the chest plate with an attachment similar to a seat belt or similar attachment device for belts or straps.

The system 100 thus enables free movement and good reach within a work area, which makes it particularly useful when working with, for example, a chainsaw, grinder, nutrunner or other heavy hand-held work tools 110 that are used for a longer period of time.

The harness 160 may be adjustable to fit different body types and may be compatible with appropriate personal protective equipment such as a helmet, hearing protection and work clothing. Some models may also have integrated pockets or attachments for other accessories. In some embodiments, the harness 160 may be designed in a high-visibility colour, such as orange or yellow, and/or comprise reflective tape.

In other embodiments, the harness 160 may comprise a strap that the user places around the neck, or over one shoulder and carries diagonally across the body, for example. In further variants, the harness 160 may be integrated into a backpack, in which the user can store various types of work tools or accessories for the work tool 110 or alternative work tools 110, for example.

The balance block 120 is arranged to be permanently or alternatively removably attached to the harness 160, for example with a cabin hook or similar attachment.

Thus, the weight of the work tool 110 is distributed with a distribution between the user's arms and the user's shoulders/ body. This improves work ergonomics, reduces muscle fatigue and the risk of muscular overload. This also improves work safety. The risk of dropping the work tool 110 is also reduced, partly because the user's muscles are not loaded as heavily and he therefore has better control over the work tool 110, and partly because the balance block 120 and the cable 130 have a catching function.

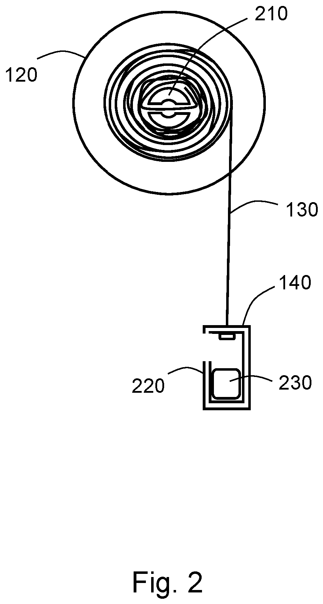

Figure 2 illustrates an embodiment of a balance block 120. The balance block 120 comprises a housing in which a spring-loaded winding mechanism/ roller spring/ coil spring 210 is arranged, intended to automatically wind up a retractable cable 130 extending from the balance block 120 and which at the end can be connected to a hand-held work tool 110 or similar object by a fastening device 140. Inside the housing, a spiral spring/ roller spring/ coil spring 210 is functionally connected to a reel drum, around which the cable 130 is attached and/ or wound, whereby the spring 210 generates a retraction force that counteracts the cable's withdrawal.

The housing or capsule of the balance block 120 may be made of metal or impact-resistant plastic. This housing comprises the winding mechanism/ roller spring 210 which constitutes the core of the work tool holding function.

The cable 130 may be made of twisted steel wire, or a wire of some other appropriate metal or metal alloy, optionally with a plastic sheath around it. In some alternative embodiments, the wire 130 may consist of a wire, for example of the material HMPE (High-Modulus Polyethylene), aramid, Kevlar, polyester, nylon, etc., optionally surface-treated with a polyurethane layer. An advantage of a cable 130 comprising a textile or plastic wire instead of a steel wire is that the weight is lower, which provides a lower weight load on the user.

When the user attaches the fastening device 140 to the work tool's bracket 150, the cable 130 is unwound from the drum of the balance block 120. At the same time, the spring 210 is tensioned inside the balance block 120. The coil spring 210 creates a resistance that automatically "lifts up" the work tool 110. As a result, the weight is distributed between the user's shoulders and/or back, and arms, which reduces one-sided load on the arms. The balance block 120 strives to pull up the work tool 110 to an equilibrium position where the spring tension matches the weight of the work tool.

In some embodiments, the balance block 120 may comprise an adjustable spring tension of the coil spring 210. This allows the user to adapt the lifting force to the weight of the work tool 110 and/or the nature of the work situation. The user may also change the lifting force of the balance block 120 for purely ergonomic reasons, to avoid one-sided loading of a certain muscle group.

Furthermore, the user may use the same harness and balance block 120 for different work tools 110, which may have different weights. This enables the user to quickly switch between work tools 110 of different weight/size, or switch between different weight distributions between arms and back when working with the same work tool 110. This allows for easy adaptation to the current work situation.

The balance block 120 may comprise a locking mechanism in some embodiments to provide a fixation of the cable 130 in a certain extended position. This locking mechanism may operatively engage between the roller drum and the housing. The locking mechanism may be designed for example as either a mechanical latch, a skid brake, or a combination of both.

In one embodiment, the locking mechanism may comprise a toothed ratchet disk, rotationally coupled to the roller drum, and a spring-loaded ratchet arm mounted in the housing. When the cable 130 is pulled out rapidly or to a defined length, the ratchet arm springs into engagement with a toothed segment on the ratchet disk, thereby preventing further rotation and thereby locking the cable 130 in the extended position. To unlock the locking device, either a certain extension movement may be initiated, or a manual unlocking mechanism may be activated.

Alternatively or complementary, the roller drum may be provided with a friction-based slip unit, for example in the form of a multi-plate brake or inertia clutch, fitted between the roller drum and the housing. This type of alternative locking mechanism allows controlled slipping in the event of excessive pulling force, and thus a certain braking effect, which stabilizes the movement and protects both the user and the mechanics.

The described locking or braking function enables a temporary fixation of the cable 130 in a desired pulled position, which is particularly advantageous when working where the position of the tool 110 needs to be stable for a certain time. This keeps the work tool 110 at a constant distance from the balance block 120, which can be an advantage in certain working situations when an attractive force from the balance block's roller spring 210 is not desirable. The function reduces the load on the user, increases ergonomics and allows for a more controlled working environment.

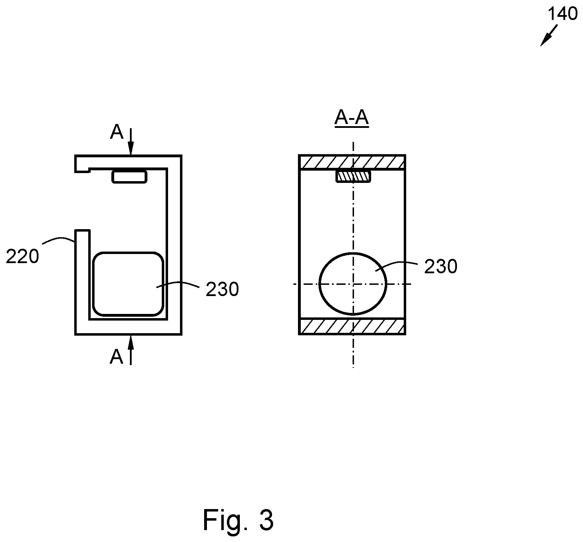

Figure 3 shows a fastening device 140, according to one embodiment. The fastening device 140 is attached to a wire 130, which in turn is attached to the balance block 120. The fastening device 140 is arranged to be removably attached to the yoke 150 which is mounted on the work tool 110 and to be able to be moved along the extension of the yoke.

The fastening device 140 may include a friction-reducing contact surface between the bracket 150 and the fastening device 140. In the illustrated embodiment, the friction-reducing contact surface may comprise a running wheel 230, whereby the contact surface between the bracket 150 and the fastening device 140 comprises the circumferential surface of the running wheel 230. In other forms, the friction-reducing contact surface may comprise a low-friction coating, for example Teflon, or similar friction-reducing plastic material, or a ball/ roller bearing.

The fastening device 140 may comprise a locking mechanism 220 for releasably securing the attachment device 140 to the bracket 150. The locking mechanism 220 may, as in the illustrated embodiment, comprise a hook or catch that is held in place by gravity and the traction force of the balance block 120, but still allows for easy removal. Other possibilities are that the locking mechanism 220 comprises a cabin hook, a screw connection, a pin, etc.

## Claims

1. A load distribution system (100) for relieving the weight of a hand-held work tool (110) from hands and arms of a user, wherein the load distribution system (100) comprises:
a balance block (120) comprising a coil spring (210) and a retractable cable (130) which is attached to the coil spring (210) at one end thereof and has a fastening device (140) at its opposite end; and
a bracket (150) mounted on the work tool (110), the bracket (150) having an extension substantially perpendicular to the longitudinal extension of the work tool (110);
a harness (160) intended to be worn by the user of the work tool (110);
wherein the balance block (120) being arranged to be attached to the harness (160); and
wherein the fastening device (140) is arranged to be removably attached to the bracket (150) and to be able to be moved along the extension of the bracket (150).

2. The load distribution system (100) according to claim 1, wherein the fastening device (140) includes a friction-reducing contact surface between the bracket (150) and the fastening device (140).

3. The load distribution system (100) according to claim 2, wherein the friction-reducing contact surface of the fastening device comprises a running wheel (230), wherein the contact surface between the bracket (150) and the fastening device (140) comprises the circumferential surface of the running wheel (230).

4. The load distribution system (100) according to any one of claims 1-3, wherein the fastening device (140) comprises a locking mechanism (220) for releasably securing the fastening device (140) to the bracket (150).

5. The load distribution system (100) according to any one of claims 1-4, wherein the bracket (150) is mounted on the hand-held work tool (110) at the approximate center of gravity of the work tool (110) in its longitudinal extent, when the work tool (110) is held in its ordinary working position.

6. The load distribution system (100) according to any one of claims 1-5, wherein the bracket (150) is shaped to define a smooth curvature, comprising an approximately constant radius from the centerline of the work tool (110), in the longitudinal extent of the work tool (110).

7. The load distribution system (100) according to any one of claims 1-6, wherein the balance block (120) has an adjustable lifting force.

8. The load distribution system (100) according to claim 7, wherein the adjustable lifting force of the balance block (120) corresponds to about 20-100% of the weight of the work tool (110), preferably about 40-60%.

9. The load distribution system (100) according to any one of claims 7-8, wherein the balance block (120) comprises a locking mechanism that locks the retractable cable (130) at a fixed position.

10. The load distribution system (100) according to any one of claims 1-9, wherein the hand-held work tool (110) comprises a chainsaw.
